# EUROPEAN PATENT APPLICATION

(11) **EP 4 517 779 A1**
(43) Date of publication of application: **05.03.2025**
(21) Application number: 23796734.4
(22) Date of filing: 24.04.2023
(51) Int. Cl.: G21C 7/24, G21C 7/08, C01F 17/224

(54) **NEUTRON ABSORBER AND NEUTRON ABSORPTION CONTROL ROD FOR NUCLEAR REACTOR**

(30) Priority: 26.04.2022 KR 20220051584
(71) Applicant: Korea Atomic Energy Research Institute, Daejeon 34057 (KR)
(72) Inventor: YANG, Jae-Ho, Sejong 30130 (KR); KIM, Dongseok, Daejeon 34020 (KR); KIM, Dong-Joo, Daejeon 34023 (KR)
(74) Representative: Gevers Patents
(86) International application number: PCT/KR2023/005543
(87) International publication number: WO 2023/211088

(57) **Abstract**

Provided is a neutron absorption control rod for a nuclear reactor including: a first neutron absorber component which includes a first oxide-based neutron absorber including a first lanthanide-based rare earth element and a first Group 4 element and is placed in a lower portion, and a second neutron absorber component which includes a second oxide-based neutron absorber including a second lanthanide-based rare earth element and a second Group 4 element and is placed on the first neutron absorber component, wherein the first neutron absorber component has a lower composition ratio of the lanthanide-based rare earth element and higher bulk density than the second neutron absorber component, and the second neutron absorber component has a higher composition ratio of the lanthanide-based rare earth element and lower bulk density than the first neutron absorber component.

## Description

### [Technical Field]

A neutron absorber for a nuclear reactor and a neutron absorption control rod are provided.

### [Background Art]

In a nuclear power plant core design of a pressurized water reactor such as an advanced power reactor (APR), a boron carbide pellet or an Ag-In-Cd (AIC) alloy is applied as a neutron absorber for a control rod. The boron carbide pellet has excellent neutron absorptive capacity. However, the boron carbide pellet may be swollen by conversion of boron into helium (He), may cause a eutectic reaction with an iron-based alloy which is a cladding material of control rod, and may cause vaporization by an oxidation reaction with water or steam in case of accident. Swelling of a boron carbide pellet and occurrence of helium gas cause deformation and damage of a control rod to limit the lifespan of a control rod assembly. In addition, melting of a control rod by a eutectic reaction between boron carbide and cladding material at a high temperature or generation of hydrogen and vaporization of oxidized phase of boron carbide by a reaction with a coolant water may accelerate accident progress and increase recriticality risk of melted core to reduce safety in case of severe accident. AIC has drawbacks such as a low melting temperature, high density, and high reactivity with a cladding material and cooling water. Accordingly, studies of replacing conventional boron carbide or AIC with an oxide-based neutron absorber which has a high melting temperature and excellent chemical stability for a neutron absorption pellet for a control rod are underway.

A neutron absorber material which replaces a conventional control rod should meet requirements such as having a neutronic worth which is equivalent or better than a conventional material, a sufficiently high melting temperature and eutectic temperature with an iron-based cladding material, high chemical stability under water environments, and sufficiently low irradiation swelling. Along with this, when it is applied to the control rod of a commercial light water reactor(LWR) such as APR, it should be in a load range which may be applied to a control rod drive mechanism for commercial power reactors. For a harmonious energy supply with renewable energy, nuclear reactors need to operate flexibly, adjusting power rate based on electricity demand. To achieve this, the control rod must remain inserted into the core for extended periods to control the flux of neutron. In preparation for this, the neutron absorber must maintain its absorption efficiency over time, even with frequent and prolonged core insertions.

In this regard, Korean Patent Laid-Open Publication No. 2018-0108573 discloses an absorption rod assembly for a nuclear reactor and an absorption control rod, and Korean Patent Registration No. 10-1991-0009192 discloses a method for manufacturing a burnable neutron absorber.

### [Disclosure]

### [Technical Problem]

The present disclosure attempts to extend the lifespan of a control rod assembly and improve stability in case of accident.

The present disclosure also attempts to be easily applied to a control rod for a LWR by adjusting a load while maintaining neutronic worth.

In addition to the above objects, an exemplary embodiment according to the present disclosure may be used for achieving other objects which are not specifically mentioned.

### [Technical Solution]

An exemplary embodiment of the present disclosure provides a neutron absorption control rod for a nuclear reactor including: a first neutron absorber component which includes a first oxide-based neutron absorber including a first lanthanide-based rare earth element and a first Group 4 element and is placed in a lower portion, and a second neutron absorber component which includes a second oxide-based neutron absorber including a second lanthanide-based rare earth element and a second Group 4 element and is placed on the first neutron absorber component, wherein a rare earth element amount per unit volume of the first neutron absorber component and a rare earth element amount per unit volume of the second neutron absorber component are the same, a ratio of the Group 4 element to the rare earth element in the first neutron absorber component is lower than a ratio of the Group 4 element to the rare earth element in the second neutron absorber component, and a weight of the second neutron absorber component is smaller than a weight of the first neutron absorber component, in which bulk density of each component is determined by reflecting neutron absorptive capacity depending on a ratio of the rare earth element to the Group 4 element.

The first oxide-based neutron absorber and the second oxide-based neutron absorber may be represented by the following Chemical Formula 1, respectively:

[Chemical Formula 1] A₁₋ₓBₓO_{1.5+0.5x±y}

wherein A is one or more elements of Eu, Gd, Dy, or Sm, B is one or more elements of Zr, Hf, or Ti, O is oxygen, x satisfies 0<x<1, and y satisfies 0≤y<0.5.

The first oxide-based neutron absorber component has a higher A/B mole ratio, that is, lower (1-x)/x and higher bulk density than the second oxide-based neutron absorber component.

The first neutron absorber component may be a cylindrical pellet. For example, the cylindrical pellet of the first neutron absorber component may have the same bulk density in an axial direction and in a radial direction inside. Otherwise, the cylindrical pellet of the first neutron absorber component may have different compositions from each other in a radial direction inside.

The second neutron absorber component may be a cylindrical pellet. For example, the cylindrical pellet of the second neutron absorber component may have the same bulk density in an axial direction and in a radial direction inside. Otherwise, the cylindrical pellet of the second neutron absorber component may have different compositions from each other in a radial direction inside.

The second neutron absorber component may be an annular pellet. For example, the annular pellet of the second neutron absorber component may have the same bulk density in an axial direction and in a radial direction inside. Otherwise, the annular pellet of the second neutron absorber component may have different compositions from each other in a radial direction inside.

Another exemplary embodiment of the present disclosure provides a neutron absorption control rod for a nuclear reactor including: a first neutron absorber component which includes a first oxide-based neutron absorber including a first lanthanide-based rare earth element and a first Group 4 element and is placed in a lower portion, and a second neutron absorber component which includes a second oxide-based neutron absorber including a second lanthanide-based rare earth element and a second Group 4 element and is placed on the first neutron absorber component, wherein a mole ratio of the first lanthanide-based rare earth element to the first Group 4 element in the first oxide-based neutron absorber, that is, (1-x)/x is 1.5:1 to 2.5:1, and a mole ratio of the second lanthanide-based rare earth element to the second Group 4 element in the second oxide-based neutron absorber, that is, (1-x)/x is 3:1 to 20:1.

Another exemplary embodiment of the present disclosure provides a method for manufacturing a neutron absorption control rod for a nuclear reactor including: mixing an oxide including a first lanthanide-based rare earth element and an oxide including a first Group 4 element and molding the mixture to manufacture a first molded product; sintering the first molded product in an air atmosphere at 1400 to 1600°C to manufacture a first sintered pellet; mixing an oxide including a second lanthanide-based rare earth element and an oxide including a second Group 4 element and molding the mixture to manufacture a second molded product; sintering the second molded product in an air atmosphere at 1400 to 1600°C to manufacture a second sintered pellet; and laminating the second sintered pellet on the first sintered pellet in a longitudinal direction, wherein the first sintered pellet has a lower composition ratio of the lanthanide-based rare earth element and higher bulk density than the second sintered pellet, and the second sintered pellet has a higher composition ratio of the lanthanide-based rare earth element and lower bulk density than the first sintered pellet.

In order to adjust a load of the neutron absorption control rod, a mole ratio of the second Group 4 element to the second lanthanide-based rare earth element has a predetermined value, and the bulk density of the second sintered pellet may be adjusted so that the second sintered pellet has the same amount per unit volume as the amount of the first lanthanide-based rare earth element of the first sintered pellet.

### [Advantageous Effects]

An exemplary embodiment may extend the lifespan of the control rod assembly and improve stability in case of accident, by applying a lanthanide-based rare earth element oxide compound component to a neutron absorber for a control rod of a pressurized water reactor.

An exemplary embodiment may be easily applied to a control rod for LWRs such as APR, by adjusting constituents, density, shape, and the like of neutron absorber components, which are arranged and stacked along the longitudinal axis of the control rod to adjust a load while maintaining neutronic worth.

### [Description of the Drawings]

FIG. 1 is a drawing which schematically shows a neutron absorption control rod according to an exemplary embodiment.
FIG. 2 is drawings which schematically show a lower cluster of a neutron absorption control rod according to an exemplary embodiment.
FIG. 3 is drawings which schematically show an upper cluster of a neutron absorption control rod according to an exemplary embodiment.
FIG. 4 is drawings which schematically show an upper cluster of a cylindrical pellet according to an exemplary embodiment.
FIG. 5 is drawings which schematically show an upper cluster of an annular pellet according to an exemplary embodiment.

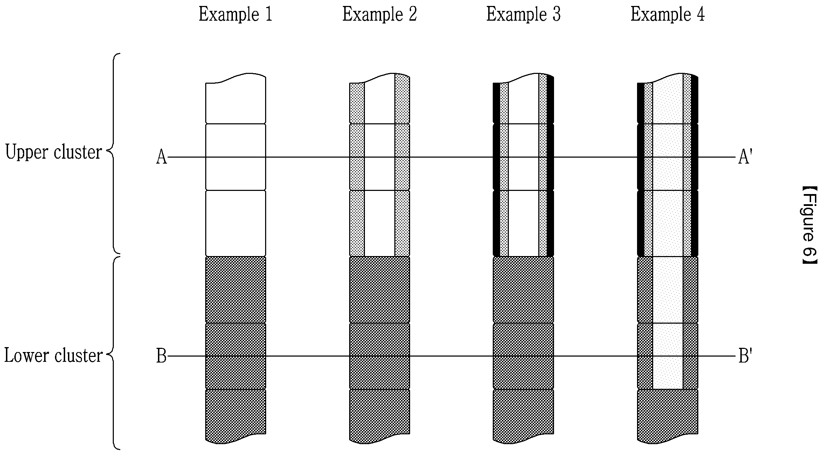

FIG. 6 is drawings which schematically show a neutron absorption control rod according to an exemplary embodiment.
FIG. 7 is a schematic diagram of neutronic worth comparison of some oxides of neutron absorber components according to an exemplary embodiment.
FIG. 8 is schematic diagrams of relationship between composition and bulk density for each neutron absorber component according to an exemplary embodiment.
FIG. 9 is drawings showing X-ray diffraction patterns before and after sintering an oxide of A/B=2 prepared in Example 1-2 and a micropore structure of a sintered pellet.
FIG. 10 is a graph of comparison of neutronic worth of an oxide of A/B=2 prepared in Example 1-2.
FIG. 11 is photographs of reaction at high temperature of the oxide of A/B=2 prepared in Example 1-2 and an Inconel 625 diffusion pair which is a cladding material.

### [Mode for Invention]

Exemplary embodiments of the present disclosure will be described in detail so that a person with ordinary skill in the art to which the present disclosure pertains may easily carry out the exemplary embodiments, with reference to the accompanying drawings. The present disclosure may be implemented in various different forms, and is not limited to the exemplary embodiments described herein. In the drawings, parts which are not relevant to the description have been omitted for clearly describing the present disclosure, and the same reference numerals are used for same or similar components throughout the specification. In addition, for well-known technologies, the specific description thereof will be omitted.

Throughout the specification, when a part "comprises" any component, unless particularly described to the contrary, it will be understood to imply the further inclusion of other components but not the exclusion of other components.

Then, a neutron absorber for a nuclear reactor and a neutron absorption control rod according to an exemplary embodiment will be described in detail.

A neutron absorber may be formed of two or more neutron absorber components having different properties from each other in terms of density and composition, in which an oxide of a lanthanide-based rare earth element, for example, one or more oxide raw materials of group A consisting of Eu₂O₃, Gd₂O₃, Dy₂O₃, and Sm₂O₃, and an oxide of Group 4 element for stabilizing structure and water chemistry properties, for example, one or more oxide raw materials of group B formed of ZrO₂, HfO₂, and TiO₂ are mixed. Herein, the neutron absorber components all have neutronic worth equivalent to or higher than boron carbide or AIC which is designed and used as a current neutron absorber of a nuclear reactor control rod. For example, the neutron absorber may be represented by the following Chemical Formula 1:

[Chemical Formula 1] A₁₋ₓBₓO_{1.5+0.5x±y}

wherein A is one or more elements of Eu, Gd, Dy, or Sm, B is one or more elements of Zr, Hf, or Ti, O is oxygen, x satisfies 0<x<1, and y satisfies 0≤y<0.5.

In Chemical Formula 1, y may change depending on oxygen partial pressure during manufacture of a neutron absorber pellet, and is 0 to 0.5. For example, when 1 mol of Eu₂O₃ and 1 mol of ZrO₂ form 1 mol of Eu₂ZrO₅, x = 0.3333 and y = 0.0 in Chemical Formula 1. Therefore, Eu₂ZrO₅ is represented by Chemical Formula 1 as follows:

Eu₂ZrO₅ = 3 (Eu_{0.667}Zr_{0.333}O_{1.6665})= 3 (EU_{1-0.333}Zr_{0.333}O_{1.5+0.5×0.333±0.0})

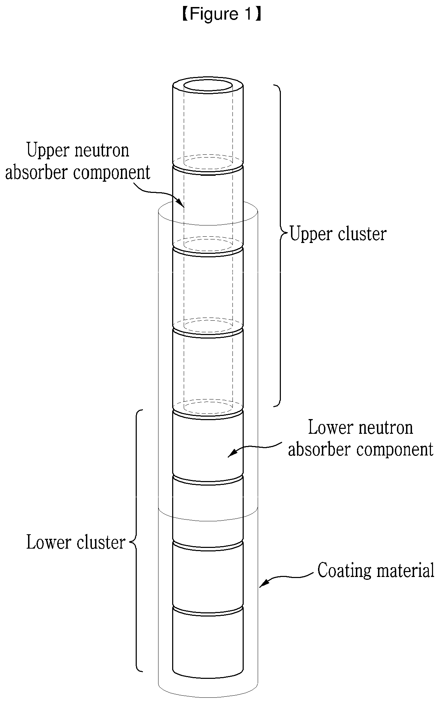

Referring to FIG. 1, two or more is selected from neutron absorber components, and then two or more clusters are formed of the same kind of absorber components. These clusters may be stacked along a longitudinal axis inside a cladding material to form a control rod.

The neutronic worth (C) of the neutron absorber component is proportional to the product of neutron absorption performance (σ) of a constituent element responsible for neutron absorption and an element amount (ρ) in unit volume of clusters. Since a group A cation in the neutron absorber component is responsible for neutron absorption, neutronic worth is higher as A/B is higher and the bulk density is closer to theoretical density. However, an A₁₋ₓBₓO_{1.5+0.5x±y} oxide has various crystal structures depending on an A/B ratio and the kind of constituent elements, and a ratio of a phase having a cubic fluorite-like structure is the highest around A/B=2, and outside the composition, the oxide has a crystal structure of low symmetry such as orthorhombic or hexagonal. Generally, an oxide having a cubic structure has least volume expansion in a neutron irradiation environment, and it is known that as the structure is out of a cubic crystal, volume swelling by neutron irradiation is increased. Therefore, as the content of the cubic fluorite structure is increased, stable use is allowed without a large volume change in an environment exposed to neutrons for a long time.

Since a lower portion of the control rod which is a part close to the reactor core is inserted into the core and operated according to operation plan during normal operation, or repeatedly inserted and drawn out, it is exposed to high neutrons for a long time, and requires high irradiation swelling resistance and structural stability. Also, performance degradation depending on a neutron absorption amount is little so that operation for a long time is allowed. The neutron absorber component forming the cluster placed in a lower portion of the control rod has neutronic worth equivalent to or higher than a conventional neutron absorber and simultaneously, and stable behavior upon exposure to neutrons for a long time is emphasized. A bulk density is 95% or more of a theoretical density, and a mole ratio of group A cations to a mole ratio of group B cations in the neutron absorber component is about 1.5:1 to about 2.5:1. In addition, in a lower cluster, a phase having a fluorite-like structure of phases forming the neutron absorber is 70% or more of the total.

A reactor shutdown capability is emphasized in the upper portion of the control rod placed relatively far from the nuclear reactor core. The neutron absorber component forming the cluster placed in an upper portion of the control rod is formed to have the same neutronic worth as the neutron absorber component placed in the lower portion, and simultaneously have low apparent density (smaller weight per unit volume than lower absorber component). This is for adjusting the control rod entire load down to a range accommodated by the control rod drive mechanism (CRDM) of the nuclear reactor. For example, when a mole ratio of group A cations to a mole ratio of group B cations in the neutron absorber component increases to about 9:1, the bulk density has a value of about 70% of the theoretical density of a compound forming the neutron absorber component, and accordingly, may decrease the weight by about 30%. Herein, the number per unit volume of the elements participating in neutron absorption is formed to be identical to the neutron absorber component placed in the lower portion, so that neutronic worth remains constant.

In the upper cluster, the neutronic worth (Cu) of the upper cluster is proportional to the product of neutron absorption performance (σ_{U}) of the constituent element of the upper cluster and bulk density (ρ_{U}) of the upper cluster. In the lower cluster, the neutronic worth (C_{L}) of the lower cluster is proportional to the product of neutron absorption performance (σ_{L}) of the constituent element responsible for neutron absorption and an element amount (ρ_{L}) in unit volume of cluster.

For example, the upper cluster increases a ratio of elements having high neutron absorptive capacity and decreases bulk density, and the lower cluster decreases a ratio of elements having high neutron absorptive capacity and increases bulk density, thereby adjusting the neutronic worth (C_{L}) of the lower cluster and the neutronic worth (Cu) of the upper cluster to be substantially the same.

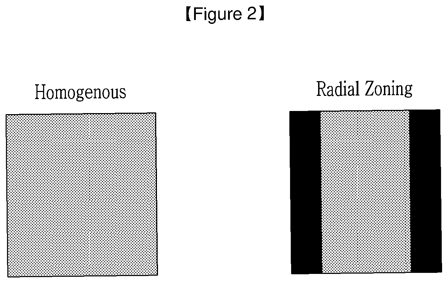

The neutron absorber component forming the lower cluster may change chemical homogeneity inside the component. For example, referring to FIG. 2, the neutron absorber component forming the lower cluster may be a cylindrical pellet, and the group A element and the group B element in the pellet are uniformly distributed in the axial direction and in the radial direction (left image), or may be formed of different compositions with the areas divided in the radial direction (right image).

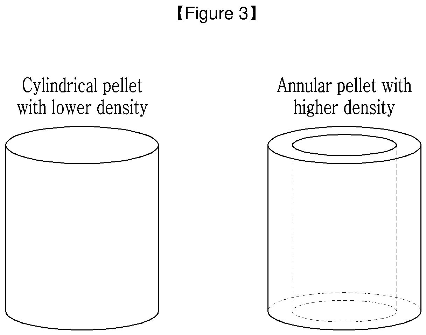

The neutron absorber component forming the upper cluster may change bulk density in the cross section of the component. For example, referring to FIG. 3, the neutron absorber component forming the upper cluster may be a cylindrical pellet having the same low bulk density in the axial direction and in the radial direction (left image), or may be formed of an annular pellet having high bulk density (right image).

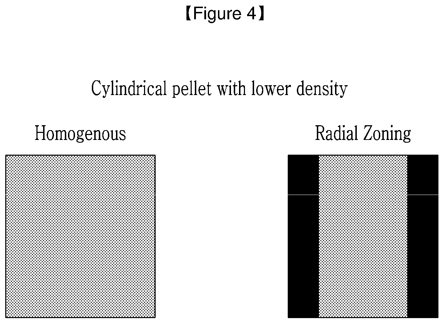

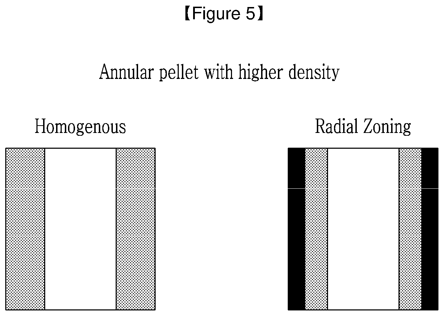

Herein, in the case of the cylindrical pellet having low bulk density, referring to FIG. 4, the group A element and the group B element in the pellet may be uniformly distributed in the axial direction and in the radial direction (left image), or may be formed of different compositions with the areas divided in the radial direction (right image). In addition, in the case of the annular pellet having high bulk density, referring to FIG. 5, the group A element and the group B element in the pellet may be uniformly distributed in the axial direction and in the radial direction (left image), or may be formed of different compositions with the areas divided in the radial direction (right image).

When the lower cluster absorber component of FIG. 2 is formed of different compositions with the areas divided in the radial direction (right image), an outside, which is highly likely to come into contact with a cladding material or coolant water, may be formed to use an oxide-based neutron absorber, and an inside may be formed to use a non-oxide-based or oxide-based neutron absorber having low bulk density such as boron carbide or upper cluster components.

When the upper cluster absorber component of FIG. 4 or 5 is divided into areas in the radial direction and formed of different compositions from each other (right image), the outside which is highly likely to come into contact with a cladding material or coolant water may be formed to use an oxide-based neutron absorber, and the inside may be formed to use a non-oxide-based neutron absorber having low bulk density. In this case, the bulk density of the outside oxide component and the ratio of the group A element to the group B element may be adjusted considering the neutron absorptive capacity of the non-oxide absorber inside.

In addition, when the upper cluster absorber component is formed of an annular pellet, structural damage should not occur by stress occurring during operation, and to this end, a support structure may be added to the inside.

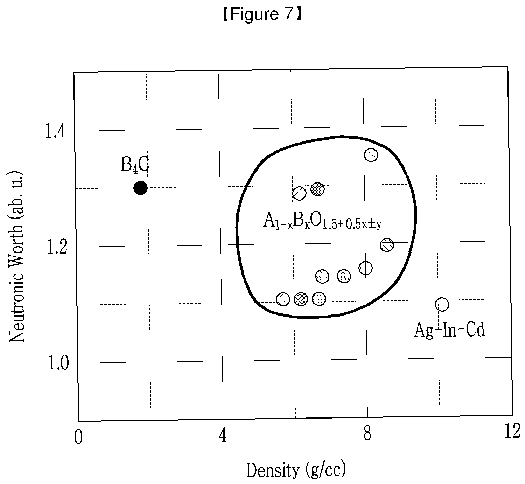

In FIG. 7, a relationship between neutronic worth and density of oxide-based neutron absorber components with A/B=2 is calculated, and is compared with boron carbide and AIC which are conventional neutron absorbers. The bulk density of the oxide neutron absorber components of FIG. 7 is about 95% of the theoretical density. In FIG. 7, the kind of A element, the ratio of A/B, and the bulk density of the neutron absorber are combined and adjust neutronic worth.

Hereinafter, the present disclosure will be described in more detail with the examples, but the following examples only illustrate the present disclosure and the present disclosure is not limited to the following examples.

### Example 1

The control rod of Example 1 is manufactured as follows. Two kinds or more of oxide-based neutron absorber component pellets which have neutronic worth equivalent to or higher than conventional neutron absorber components and follow the composition of Chemical Formula 1 were stacked in a longitudinal direction to form a control rod. At this time, the neutronic worth per unit volume according to the position in the axial direction remained constant. In the lower portion of the control rod, a neutron absorber component, which has little volume swelling by irradiation, and thus, has good irradiation stability and higher bulk density, is placed. The neutron absorber component placed in the lower portion of the control rod may be placed throughout the control rod. When load adjustment of the control rod is needed, a neutron absorber component having a higher ratio of the group A element and a lower bulk density than the neutron absorber component in the lower portion is placed in the upper portion of the control rod. Since the ratio and the bulk density of the group A element are inversely proportional, the load of the entire control rod may be adjusted so that the performance of nuclear reactor CRDM is accepted by lowering bulk density according to the ratio of the group A element placed in the upper portion.

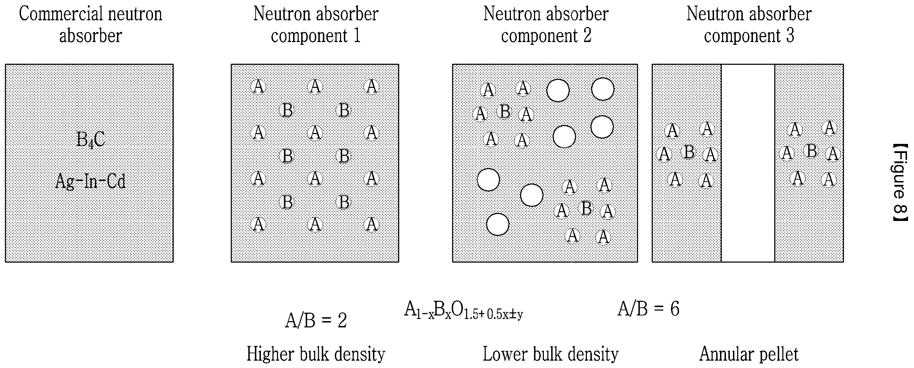

FIG. 8 schematically shows correlation between the composition and bulk density of the neutron absorber components placed in the lower and upper portions. The number of elements (A) per unit volume for neutronic worth equivalent to or higher than boron carbide or AIC for each kind of rare earth element is calculated and determined, and composition B having a crystal structure having excellent irradiation stability is selected to form the first neutron absorber component to be placed in the lower portion. The load of the second neutron absorber component to be placed in the upper portion is able to be decreased by increasing a composition ratio of A element to increase the number of A element per unit volume and then removing a space in which increased A elements existed. The bulk density may be a porous pellet having a plurality of pores inside the pellet or an annular sintered pellet.

### Example 1-2

As a specific example of the control rod of Example 1, a control rod corresponding to boron carbide which is a neutron absorber is manufactured as follows. As constituent elements in an oxide having the chemical formula of A₁₋ₓBₓO_{1.5+0.5x±y}, Eu is selected as A, and one of Ti, Zr, and Hf is selected as B, thereby forming the absorber component. At this time, the amount of Eu in the neutron absorber component for neutronic worth equivalent to boron carbide is made to have a constant value of about 0.0288 mol/cm³ per unit volume.

The neutron absorber to be placed in the lower portion of the control rod had A/B or 2-2.1 and a density of 95% or more of a theoretical density. FIG. 8 shows crystal structural change before and after sintering and a microstructure after sintering for the pellet obtained by mixing and molding Eu₂O₃ and BO₂ (B = one of Ti, Zr, and Hf) oxide powder and then sintering for several hours in an air atmosphere at 1400 to 1600°C. Most of the sintered pallet in the left XRD pattern is formed of a phase having a fluorite cubic structure, and the photograph of the SEM microstructure in the right shows that the density of the pellet is very high. A specimen density of the present example is 95% or more of the theoretical density.

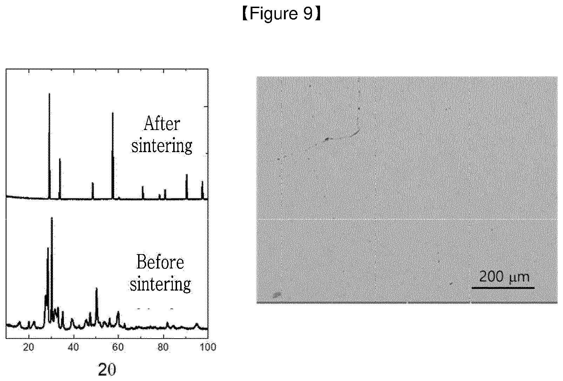

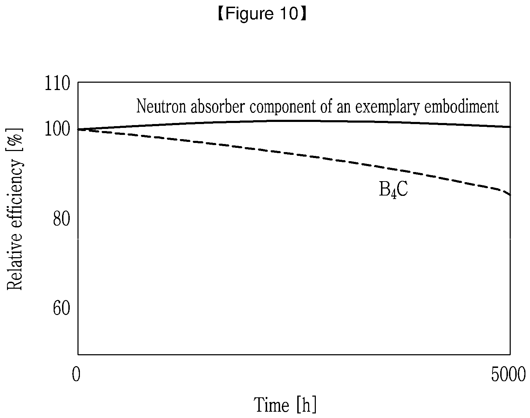

Initial neutronic worth and change in operation efficiency depending on the elapsed operation time were calculated for the neutron absorber of the present example, compared with boron carbide, and are shown in FIG. 10. The neutron absorber component of the present example had initial neutronic worth equivalent to boron carbide, and the reduction of neutronic worth (absorption efficiency) over time is very low as compared with boron carbide. In addition, as shown in FIG. 9, it is formed of a cubic crystal phase having excellent irradiation swelling resistance and lowered a volume increase of the pellet to a level of 1/15 under the same environment as boron carbide. Therefore, when the neutron absorber of the present example is applied to a part or all of the lower portion close to the core, fuel rod deformation by irradiation swelling or helium gas is suppressed to greatly and lifespan of the fuel rod assembly increases.

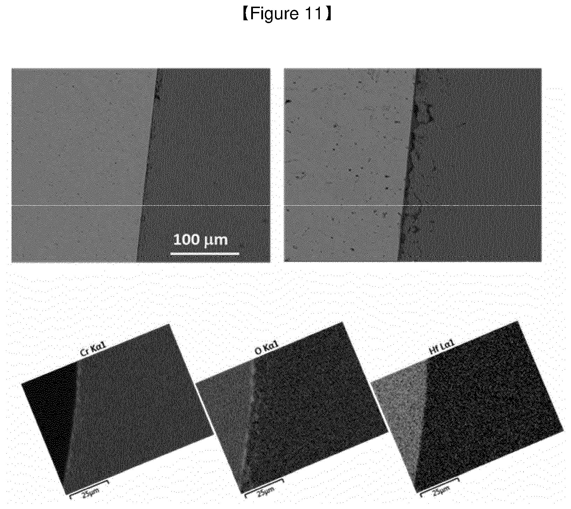

Boron carbide formed a liquid phase at around 1000°C by eutectic reaction with an iron-based alloy which is a cladding material to cause failure of the control rod. FIG. 11 is an SEM photograph in which a diffusion pair of the neutron absorber of Example 1-2 and Inconel 625 which is the cladding material is formed, a heat treatment is performed at 1100°C for 10 hours under an inert gas atmosphere, and then an interphase is observed. Diffusion or eutectic reaction is not observed even at a high temperature of 1100°C. Unlike boron carbide, any chemical reaction between two materials is not observed at all. Therefore, when the absorber of the present example is applied, damage of the control rod by a eutectic reaction or a coolant water reaction in case of accident is prevented, thereby greatly improving safety performance.

When control rod load adjustment is needed, the bulk density of the neutron absorber in the upper portion of the control rod is adjusted so that A/B value is 9 and the Eu amount per unit volume is the same as the lower component. In the case of the present example, the bulk density of the upper component is lowered to 70% of the theoretical density to form a porous pellet, and the unit volume load of the upper constituent element is lowered to a level of about 65% of the lower portion by the combination. The neutron control characteristics of the upper neutron absorber of the present example were formed so that the amount of Eu per unit volume remained the same, and thus, were the same as FIG. 10, and were similar to the reaction characteristics with the cladding material. In the case of irradiation swelling, it is as low as a level of 1/5 of boron carbide, and volume swelling resistance is excellent.

### Example 1-3

As another specific example of the control rod of Example 1, a control rod corresponding to AIC which is a neutron absorber is manufactured as follows. As a constituent element in the oxide having a chemical formula of A₁₋ₓBₓO_{1.5+0.5x±y}, Eu is selected as A, and one of Ti, Zr, and Hf is selected as B to form the absorber component. At this time, the amount of Eu in the neutron absorber component for neutronic worth equivalent to AIC is made to have a constant value of about 0.021 mol/cm³ per unit volume.

For the neutron absorbers of Example 1-3, initial neutronic worth and change in operation efficiency over operation time were similar to AIC. However, the load is about 60% of AIC. Therefore, when AIC is replaced with the neutron absorber of the present example, the assembly load may be greatly lowered. In addition, by replacing the AIC alloy with an oxide, concerns about an oxidation reaction, hydrogen production, or the like in case of accident may be greatly lowered.

When additional control rod load adjustment is needed, the bulk density of the neutron absorber in the upper portion of the control rod is adjusted so that A/B value is 9 and the Eu amount per unit volume is the same as the lower component. In Example 1-3, the bulk density of the upper component is lowered to 55% of the theoretical density, and the unit volume load of the upper component is lowered to a level of about 55% of the lower portion by the combination.

### Example 2

In the control rod of Example 1 described above, as the second neutron absorber component in the upper portion of the control rod placed for decreasing a control rod load, an annular sintered body having a high matrix density and an empty space in the middle is placed instead of the porous pellet having a plurality of pores in the matrix. The porous pellet placed in the upper portion of Example 1 and the annular sintered body placed in the upper portion of Example 2 had the same load per unit volume.

### Example 3

The control rod of Example 3 is manufactured as follows. The second neutron absorber placed in the upper portion of Examples 1 and 2 described above had a composition change in the radial direction to further adjust neutron absorptive capacity. For example, a thin layer having a high concentration of an element having a high reactor shutdown margin may be added on the surface to increase the reactor shutdown margin and further decrease the load of the neutron absorber. Otherwise, the stabilized element concentration of the surface or the thin layer may be increased to further increase stability.

### Example 4

A control rod is manufactured by replacing a part of the inside of the absorber component in the upper and lower portions of Examples 1 and 2 described above with a non-oxide absorber such as boron carbide to further decrease an assembly load and improving structural stability of an annual pellet.

### Example 5

A control rod is manufactured by replacing a part of the rare earth element oxide-based absorber components in the upper and lower portions of Examples 1 and 2 described above with a non-oxide absorber such as boron carbide to further decrease an assembly load and improving structural stability of an annual pellet.

The control rod is formed so that the shapes and the constituent elements in the AA' and BB' cross sections in Examples 1 to 4 were different from each other, but the neutronic worth of the unit volume including the cross section is the same.

A control rod which had a control rod load range of acceptable CRDM performance of the LWR and had neutronic worth equivalent to or higher than a conventional control rod, and a neutron absorber component for the control rod were provided by the configuration.

Hereinabove, the preferred exemplary embodiments of the present disclosure have been described in detail, but the scope of rights for the present disclosure is not limited thereto, and various modifications and improved forms by a person skilled in the art using the basic concept of the present disclosure defined in the following claims also belong to the scope of rights for the present disclosure.

## Claims

1. A neutron absorption control rod for a nuclear reactor comprising:
a first neutron absorber component which includes a first oxide-based neutron absorber including a first lanthanide-based rare earth element and a first Group 4 element and is placed in a lower portion, and
a second neutron absorber component which includes a second oxide-based neutron absorber including a second lanthanide-based rare earth element and a second Group 4 element and is placed on the first neutron absorber component,
wherein
the first neutron absorber component has a lower composition ratio of the lanthanide-based rare earth element and higher bulk density than the second neutron absorber component, and the second neutron absorber component has a higher composition ratio of the lanthanide-based rare earth element and lower bulk density than the first neutron absorber component.

2. The neutron absorption control rod for a nuclear reactor of claim 1, wherein:
the first oxide-based neutron absorber and the second oxide-based neutron absorber are represented by the following Chemical Formula 1, respectively:
[Chemical Formula 1] A₁₋ₓBₓO_{1.5+0.5x±y}
wherein A is one or more elements of Eu, Gd, Dy, or Sm, B is one or more elements of Zr, Hf, or Ti, O is oxygen, x satisfies 0<x<1, and y satisfies 0≤y<0.5.

3. The neutron absorption control rod for a nuclear reactor of claim 2, wherein:
an A/B mole ratio in the first oxide-based neutron absorber is 1.5 to 2.5, and an A/B mole ratio in the second oxide-based neutron absorber is 3 to 20.

4. The neutron absorption control rod for a nuclear reactor of claim 1, wherein:
the second neutron absorber component is a cylindrical pellet.

5. The neutron absorption control rod for a nuclear reactor of claim 4, wherein:
the cylindrical pellet of the second neutron absorber component has the same bulk density in an axial direction and in a radial direction inside.

6. The neutron absorption control rod for a nuclear reactor of claim 4, wherein:
the cylindrical pellet of the second neutron absorber component has different compositions in a radial direction inside.

7. The neutron absorption control rod for a nuclear reactor of claim 1, wherein:
the second neutron absorber component is an annular pellet.

8. The neutron absorption control rod for a nuclear reactor of claim 7, wherein:
the annular pellet of the second neutron absorber component has the same bulk density in an axial direction and in a radial direction inside.

9. The neutron absorption control rod for a nuclear reactor of claim 7, wherein:
the annular pellet of the second neutron absorber component has different compositions from each other in a radial direction inside.

10. The neutron absorption control rod for a nuclear reactor of claim 1, wherein:
the first neutron absorber component is a cylindrical pellet.

11. The neutron absorption control rod for a nuclear reactor of claim 10, wherein:
the cylindrical pellet of the first neutron absorber component has the same bulk density in an axial direction and in a radial direction inside.

12. The neutron absorption control rod for a nuclear reactor of claim 10, wherein:
the cylindrical pellet of the first neutron absorber component has different compositions in a radial direction inside.

13. A neutron absorption control rod for a nuclear reactor comprising:
a first neutron absorber component which includes a first oxide-based neutron absorber including a first lanthanide-based rare earth element and a first Group 4 element and is placed in a lower portion, and
a second neutron absorber component which includes a second oxide-based neutron absorber including a second lanthanide-based rare earth element and a second Group 4 element and is placed on the first neutron absorber component,
wherein
a mole ratio of the first lanthanide-based rare earth element to the first Group 4 element in the first oxide-based neutron absorber is 1.5:1 to 2.5:1, and a mole ratio of the second lanthanide-based rare earth element to the second Group 4 element in the second oxide-based neutron absorber is 3:1 to 20:1.

14. The neutron absorption control rod for a nuclear reactor of claim 13, wherein:
the first oxide-based neutron absorber and the second oxide-based neutron absorber are represented by the following Chemical Formula 1:
[Chemical Formula 1] A₁₋ₓBₓO_{1.5+0.5x±y}
wherein A is one or more elements of Eu, Gd, Dy, or Sm, B is one or more elements of Zr, Hf, or Ti, O is oxygen, x satisfies 0<x<1, and y satisfies 0≤y<0.5.

15. A method for manufacturing a neutron absorption control rod for a nuclear reactor, the method comprising:
mixing an oxide including a first lanthanide-based rare earth element and an oxide including a first Group 4 element and molding the mixture to manufacture a first molded product;
sintering the first molded product in an air atmosphere at 1400 to 1600°C to manufacture a first sintered pellet;
mixing an oxide including a second lanthanide-based rare earth element and an oxide including a second Group 4 element and molding the mixture to manufacture a second molded product;
sintering the second molded product in an air atmosphere at 1400 to 1600°C to manufacture a second sintered pellet; and
stacking the second sintered pellet on the first sintered pellet in a longitudinal direction,
wherein
the first sintered pellet has a lower composition ratio of the lanthanide-based rare earth element and higher bulk density than the second sintered pellet, and the second sintered pellet has a higher composition ratio of the lanthanide-based rare earth element and lower bulk density than the first sintered pellet.

16. The method for manufacturing a neutron absorption control rod for a nuclear reactor of claim 15, wherein:
in order to adjust a load of the neutron absorption control rod, a mole ratio of the second group 4 element to the second lanthanide-based rare earth element has a predetermined value, and the bulk density of the second sintered pellet is adjusted so that the second sintered pellet has the same content per unit volume as the content of the first lanthanide-based rare earth element of the first sintered pellet.

17. The method for manufacturing a neutron absorption control rod for a nuclear reactor of claim 15, wherein:
in order to adjust a load of the neutron absorption control rod, a part of the second neutron absorber component is replaced with a non-oxide absorber including boron carbide.
